# EUROPEAN PATENT SPECIFICATION

(11) **EP 2 850 842 B1**
(45) Date of publication and mention of the grant of the patent: **28.02.2018**
(21) Application number: 13797323.6
(22) Date of filing: 16.05.2013
(51) Int. Cl.: H04N 21/441, G10L 17/00, H04L 29/08, H04N 21/482, H04N 21/485, H04N 21/45, H04N 21/422

(54) **A SYSTEM AND METHOD FOR PERSONALIZATION OF AN APPLIANCE BY USING CONTEXT INFORMATION**
SYSTEM UND VERFAHREN ZUR PERSONALISIERUNG EINER ANWENDUNG DURCH VERWENDUNG VON KONTEXTINFORMATIONEN
SYSTÈME ET PROCÉDÉ DE PERSONNALISATION D'UN APPAREIL EN UTILISANT DES INFORMATIONS DE CONTEXTE

(30) Priority: 16.05.2012 IN 1488MU2012
(43) Date of publication of application: 25.03.2015
(73) Proprietor: Tata Consultancy Services Limited, Mumbai 400 021 (IN)
(72) Inventor: CHAKRAVARTY, Kingshuk, Kolkata 700091 West Bengal (IN); CHATTERJEE, Debatri, Kolkata 700091 West Bengal (IN); DASTIDAR, Somnath Ghosh, Kolkata 700091 West Bengal (IN); SINHA, Aniruddha, Kolkata 700091 West Bengal (IN)
(74) Representative: Heinze, Ekkehard
(86) International application number: PCT/IN2013/000317
(87) International publication number: WO 2013/179303

(56) References cited:
- EP-A2- 1 100 268
- WO-A1-2008/056954
- WO-A2-2011/163481
- JP-A- 2005 241 393
- US-A1- 2002 143 771
- US-A1- 2010 162 320
- US-A1- 2011 137 520
- US-A1- 2012 010 886
- US-B1- 6 999 932
- US-B1- 7 908 211
- Aniruddha Sinha ET AL: "Adjunct Proceedings EUROITV 2012", , 30 June 2012 (2012-06-30), pages 203-208, XP055232760, Retrieved from the Internet: URL:https://lirias.kuleuven.be/bitstream/1 23456789/350723/3/AdjProc_EuroITV2012.pdf [retrieved on 2015-12-02]

## Description

### FIELD OF THE INVENTION

0001 This present application generally relates to personalization of television applications. Particularly, the present invention relates to automatic adaptation and personalization of television user interface using user context information extracted from second screen devices in real-time.

### BACKGROUND OF THE INVENTION

0002 Education to all is considered right in most countries of the world. India alone has around 210 million students studying in 1.4 million schools that provide employment to 7 million people making the education system of India one of the largest in the world. However, dearth of skilled teachers remains a major hindrance to the spread of education, especially in remote areas of rural India and many other countries.

0003 A lot of focus has been given to improve the education system around the world for example; free online content is made available on internet. Video-conferencing platforms like Skype and other internet based messengers are also utilized for imparting education in the remote areas. However, such means are rarely utilized by a broader cross-section of population due to the lack of the required infrastructure or expertise. With the expansion of smart TV, more and more education related applications are emerging that are specific for the Television that is ubiquitous in developing countries as well. Distance education as means for education has been there for long time but it is gaining popularity with the acceptance of smart TV. The tutorials for the distance education consist of video lectures and associated question-answers (QA). A single lecture content (video, audio and QA) for a given subject and standard is prepared for all the target audience. However, distance education is opted by a variety of users ranging from college students, adults, housewives and elderly people. The same subject may be opted by elderly people and school students. However, there are differences in visual contrast sensitivity, capability of handling cognitive load and preferences. Based on this information, the content is never adapted in the TV applications which are meant for personal use.

0004 The present state of art does mention about the availability of distinct user context information related to UI on devices such as mobile phones. However, such information is different for different categories of users and none of the present arts utilize the information regarding the UI of the mobile phone to update the TV application in ubiquitous manner. Such problems related to the UI pose a limitation to the outreach of distance education, however, no attempts have yet been made to customize the television screen automatically based on the profile information stored in a second screen device such as mobile phones that may enable users, specifically people with poor eyesight or visual disorders to utilize distance education related content on television. One of the prior patent application US2002143771 discloses method and system for storing the personal information or profile of a user/customer on the remote instead of a digital television receiver/set top box. The information that is stored is personal information, such as name, address, etc., as well as commerce-related information, such as a credit card number. This information is then used to personalize the use of some electronic device and allow for faster, portable, more effective and more convenient e-commerce.

0005 In view of the problems stated above there remains a need for optimizing the user interface of the distance education means such as television in accordance with the user interface of a mobile device such as a mobile phone that keeps close track of user preferences. User preferences may differ based on languages, customs, physical deficiencies and experience level. Such differences usually get reflected in the user profiles set in the mobile phone of a person.

**0006** Other features and advantages of the present invention will be explained by means of embodiments in the following description of the application having reference to the appended drawings.

### SUMMARY OF THE INVENTION

0007 The present invention provides a system according to Claim 1 for personalizing an appliance's functioning remotely in real-time. The system comprises of a data delivery device configured to act as an interface between the appliance and a computing device by sensing from the computing device, a user's profile along with a set of parameters affecting the functioning of the appliance by means of a communication module, the set of parameters further representing a category of the user. The data delivery device further comprises of a matching module configured to match the set of parameters associated with the user's profile with a set of pre-defined parameters stored in the data delivery device and categorize the user's profile with respect to a set of stored profiles to generate an output profile, such that each output profile is defined with a matched set of parameters. The data delivery device further comprises of a control module communicating with the data delivery device to modify the appliance's functioning with respect to the matched parameters defined for the output profile.

0008 The present invention also provides a method according to Claim 9 for connecting an appliance and a computing device. The computing device is capable of personalizing the appliance's functioning remotely. The method comprises of establishing an interaction between the appliance and the computing device by sensing a user's profile along with a set of parameters affecting the functioning of the appliance, the set of parameters further representing a category of a user. The method further comprises of matching the set of parameters associated with the user's profile with a set of pre-defined parameters stored in the data delivery device and categorize the user's profile with respect to a set of stored profiles to generate an output profile, such that each output profile is defined with a matched set of parameters and modifying the appliance's functioning with respect to the matched parameters defined for the output profile.

### BRIEF DESCRIPTION OF DRAWINGS

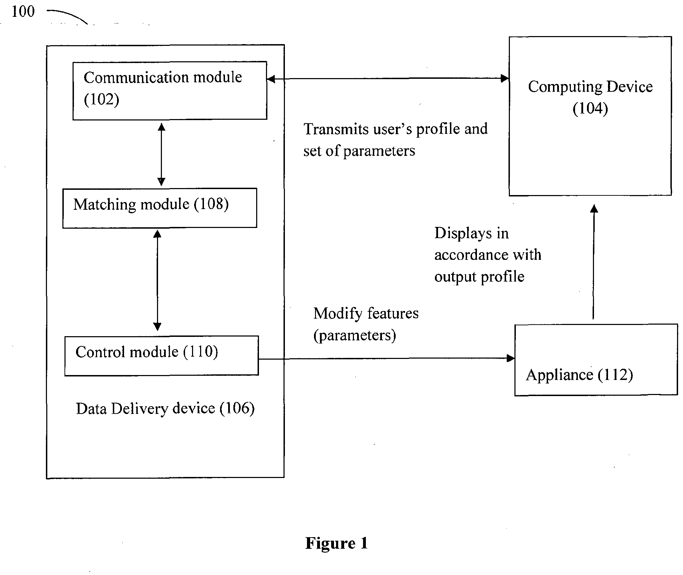

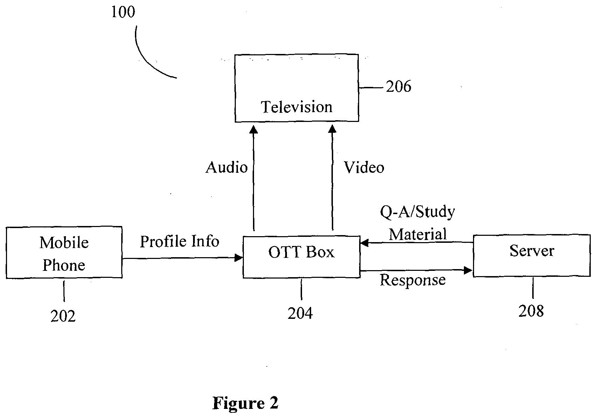

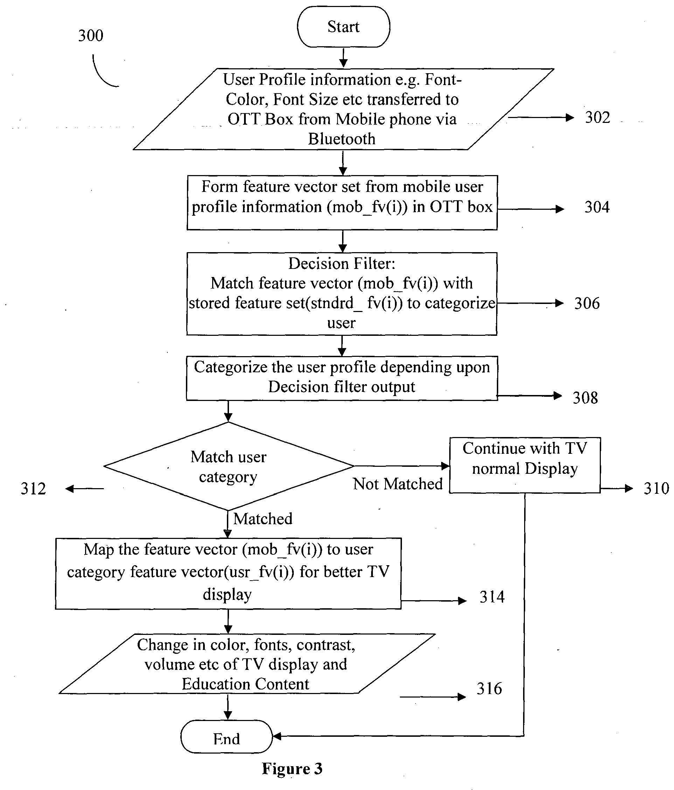

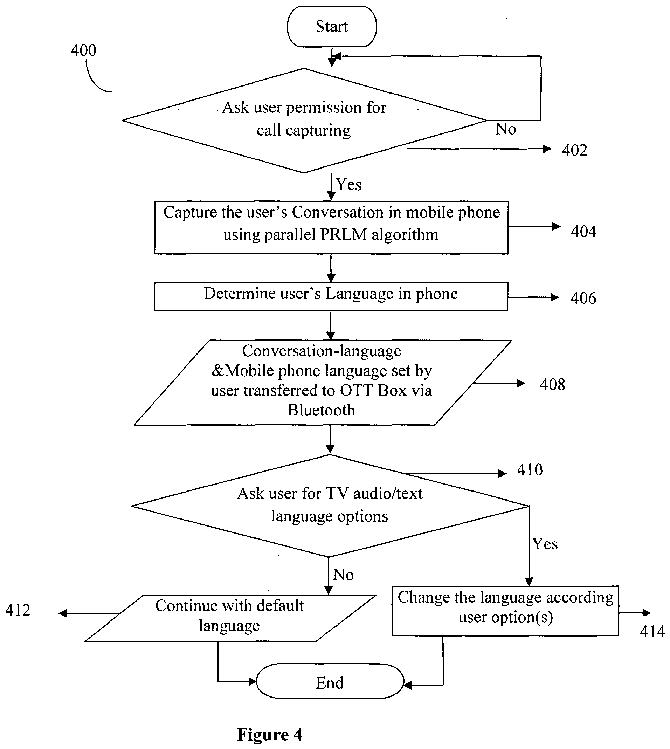

0009 Figure 1 illustrates the system architecture in accordance with an embodiment of the invention.
00010 Figure 2 represents a block diagram of a system (100) for automatic adaptation and personalization of Television, in accordance with an embodiment of the present invention.
00011 Figure 3 according to an exemplary embodiment illustrates a flowchart of a method (300) for auto adaptation of Television screen.
00012 Figure 4 according to an exemplary embodiment illustrates a flowchart of a method (400) for selecting a preferred language to be adapted in the television.

### DETAILED DESCRIPTION

00013 Some embodiments of this invention, illustrating its features, will now be discussed:
00014 The words "comprising", "having", "containing", and "including", and other forms thereof, are intended to be equivalent in meaning and be open ended in that an item or items following any one of these words is not meant to be an exhaustive listing of such item or items, or meant to be limited to only the listed item or items.

00015 It must also be noted that as used herein and in the appended claims, the singular forms "a", "an", and "the" include plural references unless the context clearly dictates otherwise. Although any systems, methods, apparatuses, and devices similar or equivalent to those described herein can be used in the practice or testing of embodiments of the present invention, the preferred, systems and parts are now described. In the following description for the purpose of explanation and understanding reference has been made to numerous embodiments for which the intent is not to limit the scope of the invention.

**00016** One or more components of the invention are described as module for the understanding of the specification. For example, a module may include self-contained component in a hardware circuit comprising of logical gate, semiconductor device, integrated circuits or any other discrete component. The module may also be a part of any software program executed by any hardware entity for example processor. The implementation of module as a software program may include a set of logical instructions to be executed by the processor or any other hardware entity. Further a module may be incorporated with the set of instructions or a program by means of an interface.

00017 The disclosed embodiments are merely exemplary of the invention, which may be embodied in various forms.

00018 The present invention provides a system and method for connecting an appliance and a computing device. The interaction provides a capability to the computing device to personalize functioning of the appliance with respect to a category of user. The system provides a sensing of a user's profile along with a set of parameters affecting the functioning of the appliance. The user's profile and the set of parameters are then matched with a pre-stored set of profile and set of parameters. The matching results in an output profile. The output profile is defined with a set of matched parameters. The functioning of the appliance is modified with respect to the matched parameters defined for the output profile in real-time.

00019 In accordance with an embodiment, referring to figure 1, the system (100) comprises of a data delivery device (106) configured to process the user's profile and provided with a communication module (102) to establish a connection between the appliance and (112) the computing device (104),. The data delivery device (106) further comprises of a matching module (108) configured to map the user's profile and associated set of parameters with pre-defined parameters so stored to categorize the user's profile and generate an output profile and a control module (110) configured to modify the functioning of the appliance (112) in accordance with the output profile and the matched parameters.

**00020** The communication module (102) establishes a connection between the appliance (112) and the computing device (104). The communication module (102) may include a blue tooth dongle, an internet device, an NFC device and alike and may be present in both the data delivery device (106) and the computing device (104). The appliance (112) may include a television set.

**00021** The computing device (104) stores a user's profile along with a set of parameters reflecting the user's cognitive ability and perception level. The set of parameters are used to change the appliance's functionality. The user profile and set of parameters are transmitted to the appliance (112) by the communication module (102). The user profile and the set of parameters may be gathered through different sources and in different ways. Some of the parameters are set by the users themselves, learning human-computing device interactions, user information extracted from the internet cloud etc. The set of parameters represents a category of the user.

**00022** The computing device (104) is a device selected from a group of mobile phones, Smartphone, PDA, tablet, and the like. The computing device (104) is generally a dedicated device for a single user that is set according to the needs of that particular user. The computing device (104) may be used to sense user profile information.

**00023** The data delivery device (106) is a device that acts as an interface between the computing device and the appliance (112) (TV). The communication module (102) (Bluetooth) supplies the user profile along with the set of parameters. This user profile and the set of parameters are sensed by the data delivery device (106). The data delivery device (106) then processes the user profile and the set of parameters to generate one or more categories of the user. The data delivery device (106) may be adapted to match the user profile and the set of parameters received from the computing device with the stored set of parameters for various users and thereupon creating one or more output profile.

00024 For example, based on the various parameters received from the computing device (104), user categories may be created that may represent a set of users having similar cognitive ability and perception. Such a user category may prompt creation of a profile to which the corresponding profile and set of parameters from the computing device are matched that may be suitable for the appliance (112) (television). Moreover, whenever there is any change in the profile stored in the computing device (104) a corresponding change may also get reflected in the appliance (112) (Television screen) instantaneously. The data delivery device (106) further includes an Over the Top (OTT) box.

00025 The data delivery device (106) further comprises of the matching module (108) to match the user profile and the set of parameters with a pre-defined set of parameters stored in the data delivery device (106). The matching module (108) forms a feature vector set of the set of parameters for different categories so received from different users. These feature vectors are then matched with the pre-defined set of parameters and then decides a user category. Once the category is decided, it generates an output profile. The output profile is defined with a matched set of parameters. The stored profile further includes an elder profile, a house wife profile or a children profile.

00026 The data delivery device (106) further comprises of the control module (110) configured to modify the appliance's (112) functioning with respect to the matched parameters defined for the output profile.

00027 In accordance with an embodiment, figure 2 represents a block diagram of a system (100) for automatic adaptation and personalization of Television. The system (100) comprises of a mobile phone (202) that acts as a computing device (104). The mobile phone (202) may be replaced by any other suitable computing as well. The system (100) also comprises of an Over the Top box as referred to as OTT box (204) acting as a data delivery device (106), a Television (206) acting as an appliance (112), and a server (208). For explanatory reasons the interactive and auto-adaptive system (100) is adapted to display education content such as question-answer and study material, however, various type of contents may also be supported by said system.

00028 The mobile phones (202) are generally used as first class personal computing devices by a plurality of people having different cognitive ability and perception. Therefore, mobile phones (202) may be utilized for sensing user cognitive ability and perception. In an aspect, the user profile along with the set of parameters may fall under profile information vectors such as icon size, font Size, foreground color, background color, brightness & contrast, microphone & speaker volume, and the like.

00029 In a related aspect, the mobile phone (202) may be an Android based mobile phone adapted to sense user profile information. In other aspects, the mobile phone (202) may be based on any other Operating System as well. Further, the server (208) may be a remote standalone server that is adapted to store all educational content such as lecture video, image, text, questionnaire files, and the like. The OTT box (204) is adapted to interact with the server (208) by means of a connectivity channel such as internet. The OTT box (104) is also adapted to render the educational content such as question answers on Television (206) screen blended with a lecture video. Furthermore, the OTT box (204) may have an in-built Bluetooth connectivity unit or an external port for connecting with a Bluetooth dongle acting as a communication module (102). The Bluetooth connectivity allows the OTT box to be paired and connected with the mobile phone (202) that may enable sending and receiving files from and to the mobile phone (202).

00030 With reference now to figures 3 and 4, represent flowcharts exemplary illustrating exemplary interaction and auto adaptation of the Television in accordance with a computing device (104). It should be appreciated that the figures are only exemplary and are not intended to assert or imply any limitation with regard to the environments in which different embodiments may be implemented. Many modifications to the depicted environments may be made.

00031 The method starts when the Television (206) is switched on to attend a lecture video session on some specific topic. The OTT box (204) connects to the remote server (208) for lecture video or study material, questionnaire and metadata file. Metadata file has the necessary information about questionnaire session. The OTT box (204) blends the question-answer on top of the lecture video frame in a Q-A session.

**00032** A user profile sensing application (MOBUSR_PROF_APP) is designed on platform such as Android platform so that it may run on Android based mobile phone and correctly get the user profile information. The profile sensing application first checks whether the profile information vector (user profile along with the set of parameters) is set on mobile-phone or not. If it is not set it will prompt user to set the profile manually. Otherwise it will send this profile information vector to OTT box (step 302). Then OTT box (204) may extract feature vector set (mob_fv(i)) which may then be used to categorize user profile. After getting feature vector set, OTT display application (OTT_App_Disp) will match the feature vector set(mob_fv(i)) with its stored standard feature vector set(stndrd_fv(i)) by means of the matching module (108)to categorize the user (step 304). Under this application, (OTT_App_Disp) distinguishing parameters and their standard levels for different target users (i.e Elderly, housewives etc) are selected based on the literature survey and guidelines available for system (100) design. These distinguishing parameters are used to form the standard feature vector (stndrd_fv(i)) for that particular target user and are stored in the OTT box. This feature vector is used for category matching in OTT_App_Disp.

**00033** The user profile information (set of parameters) obtained from mobile phone are used to form a similar feture vector((mob_fv(i)). Then a comparison is done between mob_fv(i)) and stndrd_fv(i), by using Eucledian distance measure. The comparison can also be done using other standard distance measure approach.

00034 This matching (maping) of mob_fv(i) with respect to stndrd_fv(i) is done in Decision Filter section of the application OTT_App_Disp (step 306). If the output of the Decision Filter is "Elderly", OTT_App_Disp will map the mob_fv(i) with elderly feature vector set (eldr_fv(i)) and generates an output profile as the elder profile defined with a matched parameters (features) (step 308 and 312).

00035 If the set of parameters (vector features) does not matches with the parameters stored in the data delivery device (106), the system continues with normal TV display (step 310).

00036 The control module (110) then modifies the functionality (features) of the TV in accordance with the output profile and the matched parameters (features). The set of parameters like color, contrast, fonts, volume etcof TV display and education content will be changed. As an output, user can observe changes in TV display for education content (step 314 and 316).

00037 Referring to figure 4, the computing device (106) further comprises of a capturing module (not shown in figure) configured to capture a language of communication of the user by obtaining user's consent (step 402). If the user does not provide the consent, the system displays the content in normal language (as set) without capturing. The data computing device (106) by way of MOBUSR_PROF_APP (OTT_App_Disp) application also captures the user conversations with user permission and run Parallel Phone Recognition followed by Language Modeling (parallel PRLM) algorithm on the captured speech to identify the language (step 404 and 406). Then this language information along with mobile phone default languages (set by the user) is transferred to OTT box via Bluetooth (step 408).

00038 OTT box then checks whether the lecture video content has this audio language option. If it has the option, then OTT box by means of the output module will ask for user permission to change the text and audio language for lecture content and questionnaire receptively. The output module provides an option of changing the language of the content displayed by the appliance in accordance with the language of the user or his mobile device (step 410). If the user does not want to change the language, the system continues with default language (step 412). If user provides his permission to change the language, the control module (110) changes the language (step 414). Additionally, the video content can be enhanced based on the contrast settings of the phone.

### ADVANTAGES

00039 Automatic control of appliance thereby reducing manual effort.

00040 Simple devices like mobile used to control appliance.

00041 Sharing of data with simple communication protocol without involving any complicated hardware entity.

## Claims

1. A system for personalizing an appliance's functioning remotely in real-time, the system comprising:
a data delivery device configured to act as an interface between the appliance and a computing device by sensing from the computing device, a set of parameters associated with a user's profile, by means of a communication module, wherein the set of parameters reflects user's cognitive ability and perception level, and wherein the set of parameters comprises at least one of an icon size, a font size, a foreground color, a background color, brightness and contrast, and microphone and speaker volume, the data delivery device further comprising:
a matching module configured to match the set of parameters associated with the user's profile with a set of pre-defined parameters to categorize the user's profile in one or more categories of the user with respect to a set of stored profiles to generate an output profile, such that the output profile is defined with a matched set of parameters, wherein the one or more categories of the user represent a set of users having similar cognitive ability and perception, and wherein the set of pre-defined parameters and standard levels of the pre-defined parameters are set according to the one or more categories of the user; and
a control module communicating with the data delivery device to modify the appliance's one or more standard features, in real time, according to the matched parameters defined for the output profile.

2. The system of claim 1, wherein the appliance includes a television set.

3. The system of claim 1, wherein the computing device is further selected from a group of a mobile, a landline, a laptop, a desktop.

4. The system of claim 1, wherein the data delivery device further comprises of an Over the Top (OTT) box.

5. The system of claim 1, wherein the communication module further comprises of a blue tooth device, an internet device or an NFC device.

6. The system of claim 1, wherein the set of stored profiles further comprises an elder profile, a housewife profile and a children profile.

7. The system of claim 1, wherein the computing device further comprises a capturing module configured to capture a language of communication of the user after obtaining a user's content.

8. The system of claim 1, wherein the control device is further configured to provide an option of changing the language of content displayed by the appliance to the user in accordance with the language of communication so captured.

9. A method for connecting an appliance and a computing device, the computing device capable of personalizing the appliance's functioning remotely in real time, the method comprising:
establishing, by a data delivery device, an interaction between the appliance and the computing device by sensing a set of parameters associated with a user's profile, wherein the set of parameters reflects user's cognitive ability and perception level, and wherein the set of parameters comprises at least one of an icon size, a font size, a foreground color, a background color, brightness and contrast, and microphone and speaker volume;
matching, by the data delivery device, the set of parameters associated with the user's profile with a set of pre-defined parameters to categorize the user's profile in one or more categories of the user with respect to a set of stored profiles to generate an output profile, such that the output profile is defined with a matched set of parameters, wherein the one or more categories of the user represents a set of users having similar cognitive ability and perception, and wherein the set of pre-defined parameters and standard levels of the pre-defined parameters are set according to the one or more categories of the user; and
modifying, by the data delivery device, the appliance's one or more standard features, in real time, according to the matched parameters defined for the output profile.

10. The method of claim 9 further comprises of capturing a language of communication of the user after obtaining a user's content.

11. The method of claim 9, wherein language of communication of the user is captured after obtaining a user's consent to modify the appliance's one or more standard features and to provide an option of changing a language of content displayed by the appliance to the user in accordance with the language of communication so captured.

12. The method of claim 9, wherein the matching of the set of parameters with the set of pre-defined parameters comprises comparing the set of parameters with the set of pre-defined parameters using a standard distance measuring technique.

13. The system of claim 1, wherein the matching module is configured to match the set of parameters with the set of pre-defined parameters by comparing the set of parameters with the set of pre-defined parameters using a standard distance measuring technique.

## Patentansprüche

1. System zum entfernten Personalisieren des Funktionierens eines Gerätes in Echtzeit, wobei das System aufweist:
eine Datenbereitstellungseinrichtung, die dazu konfiguriert ist, als Schnittstelle zwischen dem Gerät und einer Computereinrichtung zu wirken, indem von der Computereinrichtung ein Satz von mit einem Nutzerprofil verknüpften Parametern mittels eines Kommunikationsmoduls abgefühlt wird, wobei der Satz von Parametern die kognitiven Fähigkeiten und das Wahrnehmungsniveau eines Nutzers reflektiert und wobei der Satz von Parametern mindestens eines von einer Icon-Größe, einer Schriftart-Größe, einer Vordergrundfarbe, einer Hintergrundfarbe, Helligkeit und Kontrast und Mikrofon- und
Lautsprecherlautstärke aufweist, wobei die Datenbereitstellungseinrichtung weiter aufweist:
ein Matching-Modul, das dazu konfiguriert ist, den mit dem Nutzerprofil verknüpften Satz von Parametern mit einem Satz vordefinierter Parameter in Übereinstimmung zu bringen, um das Nutzerprofil in einer oder mehreren Kategorie/n des Nutzers hinsichtlich eines Satzes gespeicherter Profile zu kategorisieren und ein Ausgangs-Profil zu erzeugen, derart, dass das Ausgangs-Profil mit einem in Übereinstimmung gebrachten Satz von Parametern definiert ist, wobei die eine oder die mehreren Kategorie/n des Nutzers einen Satz von Nutzern repräsentiert oder repräsentieren, die ähnliche kognitive Fähigkeiten und Wahrnehmung haben, und wobei der Satz vordefinierter Parameter und Standardniveaus der vordefinierten Parameter gemäß der einen oder den mehreren Kategorie/n des Nutzers eingestellt sind; und
ein Steuermodul, welches mit der Datenbereitstellungseinrichtung kommuniziert, um ein oder mehrere Standardmerkmal/e des Gerätes in Echtzeit gemäß den für das Ausgangs-Profil definierten in Übereinstimmung gebrachten Parametern zu modifizieren.

2. System nach Anspruch 1, wobei das Gerät ein Fernsehgerät einschließt.

3. System nach Anspruch 1, wobei die Computereinrichtung weiter aus einer Gruppe ausgewählt ist, die ein Mobilfunkendgerät, ein leitungsgebundenes Telefongerät, einen Laptop und einen Schreibtischcomputer umfasst.

4. System nach Anspruch 1, wobei die Datenbereitstellungseinrichtung weiter eine Over-The-Top (OTT)-Box aufweist.

5. System nach Anspruch 1, wobei das Kommunikationsmodul weiter eine Bluetooth-Einrichtung, eine Internet-Einrichtung oder eine NFC-Einrichtung aufweist.

6. System nach Anspruch 1, wobei der Satz von gespeicherten Profilen weiter ein Ältere-Profil, ein Hausfrauen-Profil und ein Kinder-Profil aufweist.

7. System nach Anspruch 1, wobei die Computereinrichtung weiter ein Erfassungsmodul aufweist, das dazu konfiguriert ist, eine Sprache der Kommunikation des Nutzers nach Erhalt eines Contents des Nutzers zu erfassen.

8. System nach Anspruch 1, wobei die Steuereinrichtung weiter dazu konfiguriert ist, eine Option des Änderns der Sprache des Contents bereitzustellen, der durch das Gerät für den Nutzer angezeigt wird, entsprechend der erfassten Sprache der Kommunikation.

9. Verfahren zum Verbinden eines Gerätes und einer Computereinrichtung, wobei die Computereinrichtung dazu fähig ist, das Funktionieren des Gerätes in entfernt Echtzeit zu personalisieren, wobei das Verfahren aufweist:
Herstellen, durch eine Datenbereitstellungseinrichtung, einer Wechselwirkung zwischen dem Gerät und der Computereinrichtung durch Abfühlen eines Satzes von Parametern, der mit einem Nutzerprofil verknüpft ist, wobei der Satz von Parametern die kognitiven Fähigkeiten und das Wahrnehmungsniveau eines Nutzers reflektiert und wobei der Satz von Parametern mindestens eines von einer Icon-Größe einer Schriftart-Größe, einer Vordergrundfarbe, einer Hintergrundfarbe, Helligkeit und Kontrast und Mikrofon- und Lautsprecherlautstärke aufweist;
In-Übereinstimmung-Bringen, durch die Datenbereitstellungseinrichtung, des mit dem Nutzerprofil verknüpften Satzes von Parametern mit einem Satz vordefinierter Parameter, um das Nutzerprofil in einer oder mehreren Kategorie/n des Nutzers hinsichtlich eines Satzes gespeicherter Profile zu kategorisieren und ein Ausgangs-Profil zu erzeugen, derart, dass das Ausgangs-Profil mit einem in Übereinstimmung gebrachten Satz von Parametern definiert ist, wobei die eine oder die mehreren Kategorie/n des Nutzers einen Satz von Nutzern repräsentiert oder repräsentieren, die ähnliche kognitive Fähigkeiten und Wahrnehmung haben, und wobei der Satz vordefinierter Parameter und Standardniveaus der vordefinierten Parameter gemäß der einen oder den mehreren Kategorie/n des Nutzers eingestellt sind; und
Modifizieren, durch die Datenbereitstellungseinrichtung, eines oder mehrerer Standardmerkmal/e des Gerätes in Echtzeit gemäß den für das Ausgangs-Profil definierten in Übereinstimmung gebrachten Parametern.

10. Verfahren nach Anspruch 9, weiter aufweisend ein Erfassen einer Sprache der Kommunikation des Nutzers nach Erhalt von Content vom Nutzer.

11. Verfahren nach Anspruch 9, wobei die Sprache der Kommunikation des Nutzers nach dem Erhalt von Content vom Nutzer erfasst wird, um ein oder mehrere Standardmerkmal/e des Gerätes zu modifizieren und eine Option des Änderns der Sprache des Contents bereitzustellen, der durch das Gerät dem Nutzer bereitgestellt wird, in Übereinstimmung mit der erfassten Sprache der Kommunikation.

12. Verfahren nach Anspruch 9, wobei das In-Übereinstimmung-Bringen des Satzes von Parametern mit dem Satz von vordefinierten Parametern ein Vergleichen des Satzes von Parametern mit dem Satz von vorbestimmten Parametern unter Nutzung einer Standard Abweichungs-Messtechnik aufweist.

13. System nach Anspruch 1, wobei das Matching-Modul dazu konfiguriert ist, den Satz von Parametern mit dem Satz von vordefinierten Parametern durch Vergleichen des Satzes von Parametern mit dem Satz von vorbestimmten Parametern unter Nutzung einer Standard Abweichungs-Messtechnik, in Übereinstimmung zu bringen.

## Revendications

1. Système pour personnaliser le fonctionnement d'un appareillage, à distance et en temps réel, le système comprenant :
un dispositif de distribution de données configuré pour faire office d'interface entre l'appareillage et un dispositif ordinateur en détectant, depuis le dispositif ordinateur, un groupe de paramètres associés avec un profil utilisateur, au moyen d'un module de communication, dans lequel le groupe de paramètres reflète la capacité cognitive et le niveau de perception de l'utilisateur, et dans lequel le groupe de paramètres comprend au moins un paramètre parmi une taille des icônes, une taille de caractères, une couleur d'avant-plan, une couleur d'arrière-plan, une luminosité et un contraste, ainsi qu'un volume de microphone et un volume de haut-parleur, le dispositif de distribution de données comprenant en outre :
un module d'accord configuré pour accorder le groupe de paramètres associés avec le profil utilisateur avec un groupe de paramètres prédéfinis pour catégoriser le profil utilisateur dans une ou plusieurs catégories d'utilisateurs par rapport à un groupe de profils stockés afin de générer un profil de sortie, de telle façon que le profil de sortie est défini avec un groupe de paramètres accordés, dans lequel lesdites une ou plusieurs catégories d'utilisateurs représentent un groupe d'utilisateurs ayant une capacité cognitive et une perception similaires, et dans lequel le groupe de paramètres prédéfinis et les niveaux standards des paramètres prédéfinis sont fixés en accord avec lesdites une ou plusieurs catégories d'utilisateurs ; et
un module de commande qui communique avec le dispositif de distribution de données pour modifier une ou plusieurs caractéristiques standard de l'appareillage, en temps réel, en accord avec les paramètres accordés définis pour le profil de sortie.

2. Système selon la revendication 1, dans lequel appareillage inclut un appareil de télévision.

3. Système selon la revendication 1, dans lequel le dispositif ordinateur est en outre sélectionné parmi un groupe comprenant un téléphone mobile, un téléphone fixe, un ordinateur portable, un ordinateur stationnaire.

4. Système selon la revendication 1, dans lequel le dispositif de distribution de données comprend en outre un boîtier "OTT" (Over the Top ou "boîtier auxiliaire").

5. Système selon la revendication 1, dans lequel le module de communication comprend en outre un dispositif Bluetooth, un dispositif Internet ou un dispositif NFC.

6. Système selon la revendication 1, dans lequel le groupe de profils stockés comprend en outre un profil de personne âgée, un profil de femme au foyer, et un profil d'enfant.

7. Système selon la revendication 1, dans lequel le dispositif ordinateur comprend en outre un module de capture configuré pour capturer une langue de communication de l'utilisateur après avoir obtenu un contenu utilisateur.

8. Système selon la revendication 1, dans lequel le dispositif de commande est en outre configuré pour proposer une option pour changer la langue du contenu affiché par l'appareillage à l'utilisateur en accord avec la langue de communication ainsi capturée.

9. Procédé pour connecter un appareillage et un dispositif ordinateur, le dispositif ordinateur étant capable de personnaliser le fonctionnement de l'appareillage, à distance et en temps réel, le procédé comprenant les étapes consistant à :
établir, par un dispositif de distribution de données, une interaction entre l'appareillage et le dispositif ordinateur en détectant un groupe de paramètres associés avec un profil utilisateur, dans lequel le groupe de paramètres reflète la capacité cognitive et le niveau de perception de l'utilisateur, et dans lequel le groupe de paramètres comprend au moins un paramètre parmi une taille des icônes, une taille de caractères, une couleur d'avant-plan, une couleur d'arrière-plan, une luminosité et un contraste, et un volume de microphone et un volume de haut-parleur ;
accorder, par le dispositif de distribution de données, le groupe de paramètres associés avec le profil utilisateur avec un groupe de paramètres prédéfinis pour catégoriser le profil utilisateur en une ou plusieurs catégories utilisateur par rapport à un groupe de profils stockés afin de générer un profil de sortie, de telle façon que le profil de sortie est défini avec un groupe de paramètres accordés, dans lequel lesdites une ou plusieurs catégories d'utilisateurs représentent un groupe d'utilisateurs ayant une capacité cognitive et une perception similaires, et dans lequel le groupe de paramètres prédéfinis et les niveaux standards des paramètres prédéfinis sont fixés en accord avec lesdites une ou plusieurs catégories d'utilisateurs ; et
modifier, par le dispositif de distribution de données, une ou plusieurs caractéristiques standard de l'appareillage, en temps réel, en accord avec les paramètres accordés définis pour le profil de sortie.

10. Procédé selon la revendication 9, comprenant en outre l'étape consistant à capturer un langage de communication de l'utilisateur après avoir obtenu un contenu utilisateur.

11. Procédé selon la revendication 9, dans lequel la langue de communication de l'utilisateur est capturée après avoir obtenu un contenu utilisateur pour modifier une ou plusieurs caractéristiques standard de l'appareillage et proposer une option pour changer une langue du contenu affiché par l'appareillage à l'utilisateur en accord avec la langue de communication ainsi capturée.

12. Procédé selon la revendication 9, dans lequel la mise en accord du groupe de paramètres avec le groupe de paramètres prédéfinis comprend une comparaison du groupe de paramètres avec le groupe de paramètres prédéfinis en utilisant une technique de mesure de distance standard.

13. Système selon la revendication 1, dans lequel le module d'accord est configuré pour accorder le groupe de paramètres avec le groupe de paramètres prédéfinis en comparant le groupe de paramètres avec le groupe de paramètres prédéfinis en utilisant une technique de mesure de distance standard.
